# EUROPEAN PATENT SPECIFICATION

(11) **EP 0 382 192 B1**
(45) Date of publication and mention of the grant of the patent: **18.08.1993**
(21) Application number: 90102415.8
(22) Date of filing: 07.02.1990
(51) Int. Cl.: G11B 9/10, G11C 11/00

(54) **Scanning tunneling microscope memory apparatus**
Rastertunnelmikroskop-Speichergerät
Appareil mémoire avec microscope tunnel à balayage

(30) Priority: 09.02.1989 JP 30339/89; 20.03.1989 JP 68555/89
(43) Date of publication of application: 16.08.1990
(73) Proprietor: OLYMPUS OPTICAL CO., LTD., Tokyo 151 (JP)
(72) Inventor: Mimura, Yoshiyuki, Hachioji-shi, Tokyo (JP); Kajimura, Hiroshi, Suginami-ku, Tokyo (JP); Kouchi, Toshihito, Tama-shi, Tokyo (JP); Toda, Akitoshi, Kunitachi-shi, Tokyo (JP); Isono, Yasuo, Fussa-shi, (JP); Ohta, Hiroko, Hachioji-shi, Tokyo (JP); Shimizu, Ryouhei, Koshigaya-shi, Saitama-ken (JP)
(74) Representative: KUHNEN, WACKER & PARTNER

(56) References cited:
- EP-A- 0 247 219
- EP-A- 0 275 881
- EP-A- 0 381 113

## Description

The present invention relates to a scanning tunneling microscope memory apparatus comprising a memory device, which includes tunnel current probes and a recording element, and a signal processing circuit for writing/reading data in/from the recording element.

A probe with a pointed tip portion is approached to an electrically conductive workpiece at a distance of several nm, and a voltage is applied across the probe and the workpiece, so that a tunnel current flows therebetween by virtue of tunnel effect. The value of the tunnel current varies dramatically in accordance with the change in distance between the probe and the workpiece.

A scanning tunneling microscope (STM) utilizes the characteristic of the tunnel current, and allows atomic-level observation of the surface configuration of a workpiece. In the STM, a probe is caused to scan over the surface of the workpiece, and the distance between the probe and the workpiece is controlled. Thus, a three-dimensional image representative of the surface configuration of workpiece is obtained. For example, while the distance between the probe and the workpiece is controlled so as to keep the tunnel current constant, the probe is caused to scan over the surface of workpiece. Based on the positional data of the probe obtained during the scan, an STM image is obtained. The tunnel current flowing between the probe and the workpiece mainly depends on the work functions of materials of the probe and the workpiece. Thus, the tunnel current produced while the probe is caused to scan is changed by the data recorded on the workpiece in the form of projections and recesses, the kind of atoms of the workpiece, or the charge trapped on the surface of the workpiece.

It has been proposed to describe a pattern directly on a silicon substrate with use of the STM. For example, J. Vac. Sci. Technol. B Vol. 4, No. 1, Jan/Feb, 1986 (M.A. McCord, et al.) reports that tracks were formed on a metal deposition film on a silicon substrate after the film was STM-scanned with energy of 10 eV. Also, this document reports that lines were written on a 10 nm decosenoic LB film by means of a beam of 25 V and 12 nA.

Further, C. F. Quate, M.J.Zdoblick, T.R.Albrecht, et al. reported on a micro STM wherein an end portion of a cantilever is provided with a probe having a pointed tip portion. This cantilever is driven by two piezoelectric elements which are formed of ZnO. The cantilever is formed by an IC process so as to have the size of 20 µm x 200 µm x 5 µm. Also, the probe is formed by an IC process in which deposition is performed by using a mask with a hole of about 3 µm diameter.

EP-A-0 247 219 discloses a scanning tunnelling microscope memory apparatus according to the preamble of claim 1. The known memory apparatus comprises an array of tunnel tips arranged at tunnelling distance from a storage medium. Each tunnel tip is supported on its own cantilever beam extending across a cavity formed in a common substrate. Each cantilever beam as well as the bottom of each cavity is covered with an electrically conducting layer enabling the distance between each of the tunnel tips and the surface of the storage medium to be electrostatically controlled. The storage medium is attached to the free end of a column which end in operation performs a circular motion so that each tunnel tip scans its associated area of the storage medium along a circular track.

EP-A-0 381 113 has a later publication date than the present patent, but is considered to be comprised in the state of the art according to Art. 54 (3) EPC. This prior application discloses a scanning tunnelling microscope memory apparatus using two separate lever bodies for carrying the tunnel current probes and the recording element, but does not disclose the use of an input/output arithmetic means.

The object of the present invention is to provide a scanning tunneling microscope memory apparatus suitable for signal processing for writing/reading data in/from an STM memory.

This object is achieved by a scanning tunneling microscope memory apparatus according to claim 1. Advantageous implementations of the invention are stated in the subclaims.

Additional advantages of the invention will be set forth in the description which follows, and in part will be obvious from the description, or may be learned by practice of the invention. The objects and advantages of the invention may be realized and obtained by means of the instrumentalities and combinations particularly pointed out in the appended claims.

This invention can be more fully understood from the following detailed description when taken in conjunction with the accompanying drawings, in which:

The accompanying drawings, which are incorporated in and constitute a part of the specification, illustrate a presently preferred embodiment of the invention, and together with the general description given above and the detailed description of the preferred embodiment given below, serve to explain the principles of the invention.
Fig. 1 schematically shows a scanning tunneling microscope memory apparatus according to the present invention;
Fig. 2 is a perspective view showing structures of first and second cantilevers;
Fig. 3 is a block diagram showing a CCD circuit, a control circuit and an FIFO (First-in First-out);
Fig. 4 shows structures of a CCD block, a plurality of STM memory blocks and the connection of their peripheral circuits;
Fig. 5 is a view for explaining a data read-out operation;
Fig. 6 is a view for explaining a data write operation;
Fig. 7 shows an example of data recorded by causing one tunnel current probe to scan over a corresponding memory region; and
Figs. 8A and 8B illustrate the movement of the probe at the time of writing and reading data.

In the basic operation of an STM (scanning tunneling microscope), a tunnel current probe is caused to scan over a facing surface in accordance with a predetermined cycle. Thus, in an STM memory apparatus, it is desirable that data is written/read out in/from, block by block, each scanned region. In this case, the data may be digital or analog.

An embodiment of the present invention will now be described with reference to the accompanying drawings.

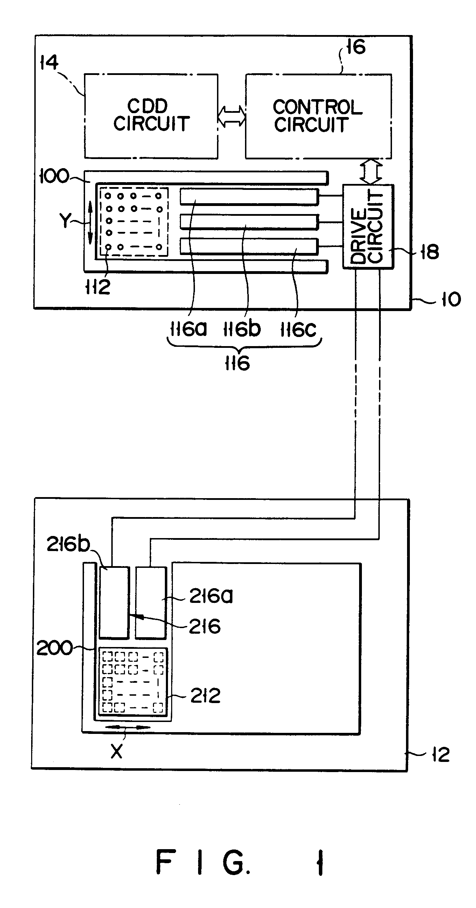

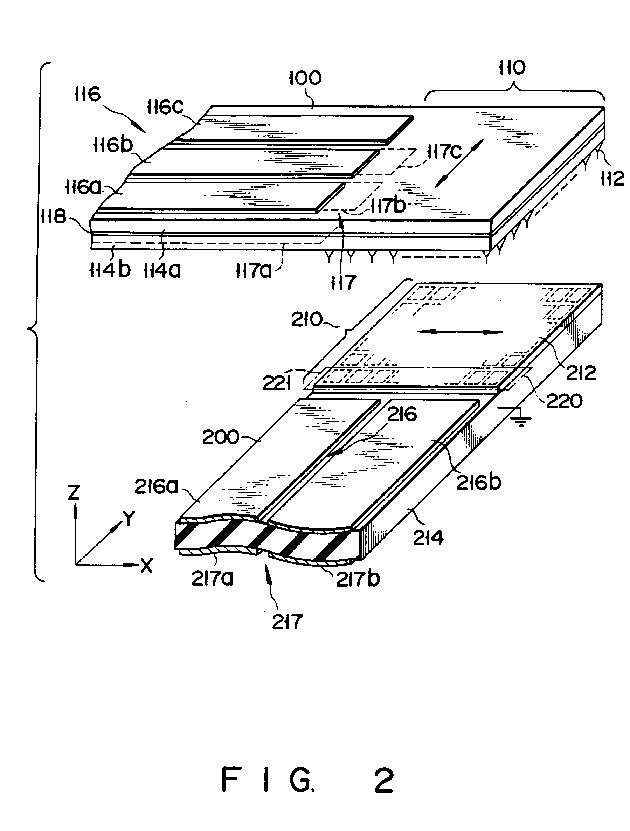

As shown in Fig. 1, an STM memory apparatus comprises first and second IC substrates 10 and 12. The substrates 10 and 12 have first and second cantilevers 100 and 200 which are allowed to perform a scanning operation by means of piezoelectric elements. The first substrate 10 includes a CCD circuit 14, a control circuit 16 for controlling the cantilever, CCD circuit, etc., and a drive circuit 18 having a pre-amplifier, a write circuit, a servo circuit, etc. The first and second substrates 10 and 12 are superposed on each other at a given distance, such that the first and second cantilevers 100 and 200 cross each other at right angles. Accordingly, as shown in Fig. 2, free end portions 110 and 210 of the first and second cantilevers 100 and 200 face each other at a predetermined distance.

The first cantilever 100 includes a pair of piezoelectric elements 114a and 114b formed of, e.g. ZnO, a center aluminum electrode layer 118 interposed between piezoelectric elements 114a and 114b, and upper and lower aluminum electrode layers 116 and 117 formed on the upper and lower sides of the piezoelectric elements 114a and 114b. The upper electrode layer 116 has three electrode patterns 116a, 116b and 116c extending in the longitudinal direction of the cantilever 100, and also the lower electrode layer 117 has three electrode patterns 117a, 117b and 117c extending in the longitudinal direction of the cantilever 100. Upon application of a predetermined voltage to the electrodes 116 to 118, the free end portion of cantilever 100 is moved in Z- and Y-directions (in Fig. 2). In other words, when voltages, which have opposite phases with respect to the center common electrode 118, are applied to the electrode patterns 116b and 117b, one of the piezoelectric elements (e.g. 114a) extends and the other (e.g. 114b) contracts. As a result, the cantilever 100 is bent and the free end portion 110 of cantilever 100 is moved in the Z-direction. When opposite-phase voltages are applied to the facing electrode patterns 116a and 117a and to the facing electrode patterns 116c and 117c, the free end portion 110 is moved in the Y-direction.

On the other hand, the second cantilever 200 has upper and lower aluminum electrodes 216 and 217 that sandwich a piezoelectric element 214 formed of, e.g. ZnO. The upper electrode 216 has two electrode patterns 216a and 216b separately extending in the longitudinal direction of cantilever 200, and also the lower electrode 217 has two electrode patterns 217a and 217b separately extending in the longitudinal direction of cantilever 200. When opposite-phase voltages are applied to the facing electrode patterns 216a and 217a and to the facing electrode patterns 216b and 217b, a free end portion 210 of the second cantilever 200 is moved in the X-direction.

A plurality of tunnel current probes 112 are provided on the free end portion 110 of first cantilever 100. The tunnel current probes 112 are spaced apart from one another, for example, by a distance equal to a scan amplitude of cantilever 100. On the other hand, a recording element 212 is provided on the free end portion 210 of second cantilever 200. Thus, the tunnel current probes 112 and the recording element 212 face each other at a given distance. The first and second cantilevers 100 and 200 are moved independently in the Y- and X-directions, whereby the probes 112 scan the surface of recording element 212. For example, data is written in a lattice manner on a portion of the surface of recording element 212, which is selected as a charge or magnetic domain.

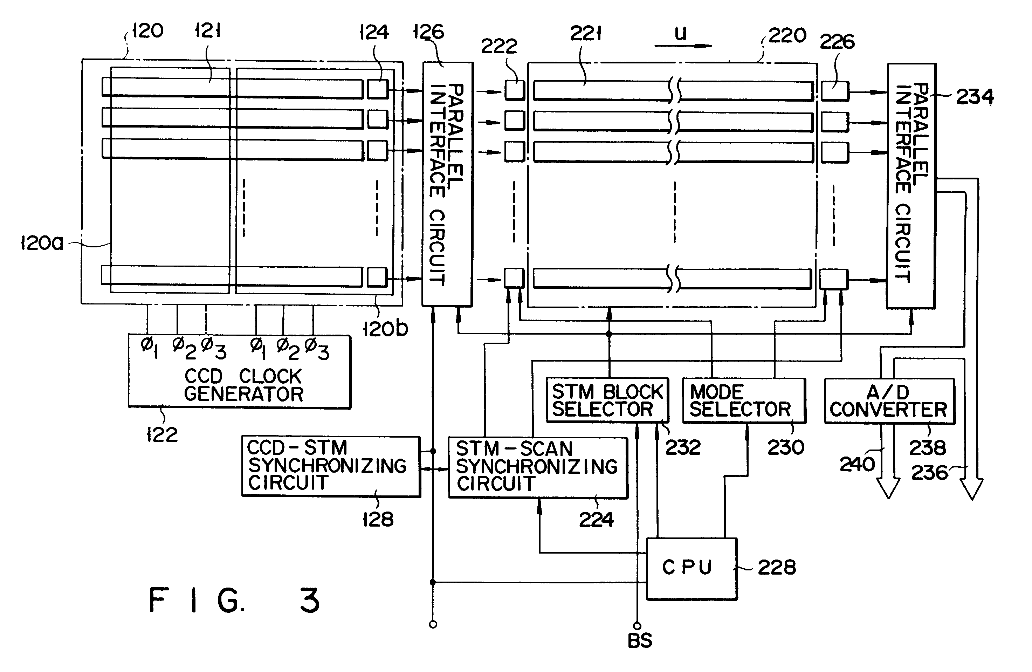

Referring to Fig. 3, a CCD block 120 includes an n-number of surface channel type CCD arrays 121, etc. Each array 121 of CCD block 120 is controlled by, e.g. a three-phase CCD clock generator 122. Data is output from the CCD arrays 121 to corresponding CCD output diodes 124 in a parallel manner. The CCD block 120 has a light-receiving section 120a in an area corresponding to the front part of the arrays 121, and has a transfer section 120b in an area corresponding to the rear part of the arrays 121. An STM memory block 220 corresponds to an n-number of memory regions 221 on the recording element 212. Each memory region 221 has a memory capacity of 10,000 (points) digits in a two-dimensional (x, y) serial recording area, when a scan stroke is set to 100 mn and an interval of record positions is set to 1 mn. Data write circuits 222 connected to associated memory regions 221 are controlled by write control pulses output from an STM scan synchronizing circuit 224, so that the tunnel current probes 112 corresponding to the memory regions 221 are operated and data is written in predetermined locations. Read amplifiers 226 connected to the memory regions 221 and connected to the corresponding tunnel current probes 112 are controlled by read control pulses output from the STM scan synchronizing circuit 224, so that the tunnel current probes 112 associated with the memory regions 221 are operated and data is read from predetermined locations. The data read/write operation is controlled by a mode selector 230, which receives a mode signal from a system controller or CPU 228, and an STM block selector 232 which receives a block select signal from the CPU 228.

The n-number of CCD output diodes 124 of the CCD block 120 are connected through a parallel interface circuit 126 to the STM memory block 220 having the n-number of memory regions 221. The parallel interface circuit 126 is controlled by a CCD-STM synchronizing circuit 128. Namely, data fed from the CCD output diodes 124 at a predetermined timing is supplied to the associated data write circuits 222, pair by pair. For example, the relationship between the transfer speed (c) of the CCD and the write speed (ft) of the STM is set to be ft = n · fc (n = an integer). In the case where the transfer capacity of each CCD array 121 is 1,000 (pixels) digits, when fc = 100 KHz and n = 10, data is written by clocks of ft = 1 MHz during the scan of the STM. In this case, data is written in the serial record region by means of an interleave of 1 : 10. Namely, images of 10 frames are recorded in one STM memory block by 10 parallel transfer operations. In the case where the CCD output is analog and analog data is written in the STM memory block such that one data unit corresponds to one memory region, the data can be written in the STM memory in the interleave manner, as described above. On the other hand, when the CCD output is A/D converted, an A/D converter is combined with the interface circuit 126. In this case, for example, 10-bit digital data can be stored in the STM memory with high density, with use of the above transfer rate.

A parallel interface circuit (PIF) 234 supplies data from the read amplifiers 226 to a bus 236. On the other hand, who analog data is stored in the STM memory, the interface (PIF) 234 supplies the data to a digital bus 240 through an A/D converter 238.

When data is analog, the parallel interface circuits 126, 130 and 234 are constituted by, for example, MOS type switched-capacity circuits (SC circuits) capable of processing analog signals. The parallel interface circuits 126 and 234 and the STM memory block 220 are controlled by an STM block selector 232 connected to the CPU 228.

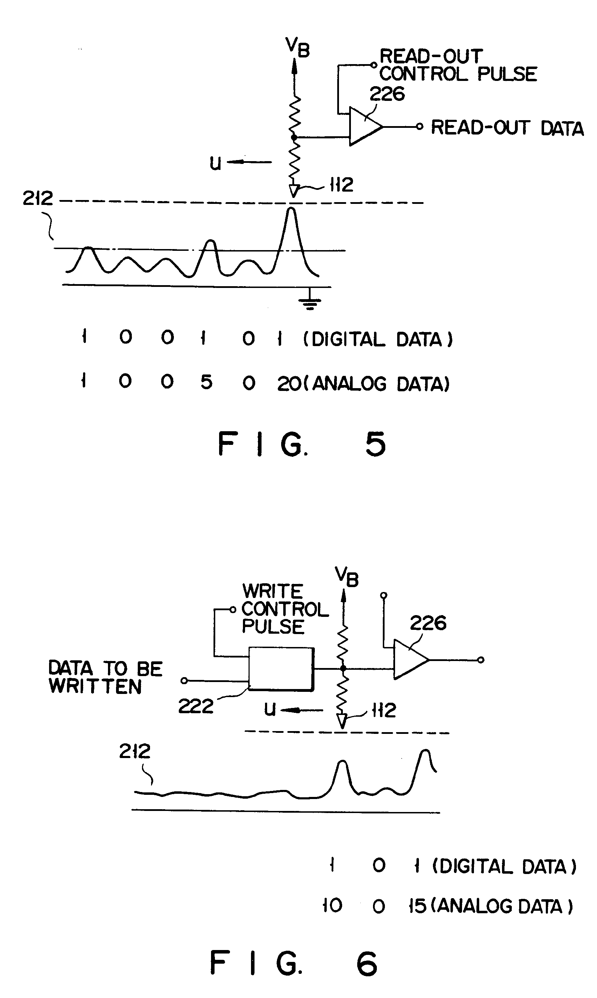

The read-out operation will now be described with reference to Fig. 5. The drive circuit 18 applies opposite-phase AC voltages across the facing electrode patterns 116a and 117a and across the facing electrode patterns 116c and 117c of the first cantilever 100. Similarly, the drive circuit 18 applies opposite-phase AC voltages across the facing electrode patterns 216a and 217a and across the facing electrode patterns 216b and 217b of the second cantilever 200. Consequently, the free end portion 110 of first cantilever 100 oscillates in the X-direction, and the free end portion 210 of second cantilever 200 oscillates in the Y-direction. In this case, the cycle of oscillation of each free end portion is determined and synchronized by the drive circuit 18, whereby the tunnel current probes 112 provided on the free end portion 110 of first cantilever 100 is caused to scan over the surface of the recording element 212 provided on the free end portion 210 of second cantilever 200.

Voltages, which have opposite phases with respect to center electrode 118, are applied across the facing electrode patterns 116b and 117b of first cantilever the vertical direction or Z-direction. The voltages applied to the electrode patterns 116b and 117b are controlled by the drive circuit 18 on the basis of a tunnel current flowing through one of the tunnel current probes 112, for example, a center probe. Thus, for example, a predetermined distance can be kept between the tunnel current probe 112 and the recording element 212.

The mode selector 230 is controlled by a mode signal output from the CPU 228, and a read control pulse is supplied from the STM scan synchronizing circuit 224 to the read amplifiers 226 connected to the STM memory block 220 selected by the STM block selector 232. Consequently, while the tunnel current probes 112 are moved in the direction of symbol u, data in each memory region 221 of the selected STM memory block 220 is read out by the corresponding probe.

During the scan operating, the tunnel currents flowing between the selected STM memory block 220 and the corresponding tunnel current probes 112 are detected by the read amplifiers 226. In accordance with the magnitude and variation of the detected tunnel currents, analog data, e.g. "20, 0, 5, 0, 0, 1...", is output to the bus 236. If necessary, digital data, e.g."(10010), (00000), (00101), (00000), (00000), (00001)", is supplied to the digital bus 240 through the A/D converter 238. In the case of digital data, data "(10010), (00000), (00101), (00000), (00000), (00001)" is output directly to the digital bus 240.

Next, the write operation will now be described with reference to Fig. 6. In the write operation, the tunnel current probes 112 are caused to scan over the recording element 212 in the same manner as in the read-out operation. In this state, the mode selector 230 is controlled by the mode signal output from the CPU 228, and a write control pulse is supplied from the STM scan connected to the STM memory block selected by the STM block selector 232. In other words, the data transferred to the parallel interface circuit 126 through the CCD output diodes 124 is supplied to the data write circuits 222 at the timing set by the CCD-STM synchronizing circuit 128. As a result, the data is written in the selected STM memory block 222 in digital form (e.g. "1, 0, 1...") or in analog form (15, 0, 10...").

The recording of analog data is effected, for example, by controlling the voltage applied across the tunnel current probes 112 and the recording medium 212 in accordance with the data to be recorded. More specifically, the data write circuit 222 comprises a variable voltage power source for applying a voltage across the tunnel current probes 112 and the recording element 212. Thus, a voltage corresponding to the data to be recorded is applied across the probes 112 and the recording element 212. As a result, the charge, the amount of which corresponds to the data to be recorded, is trapped on the recording element 212. In accordance with the amount of trapped charge, the energy state of free electrons on the surface of recording element 212 is determined, and this energy state is observed at the time of data read-out. Accordingly, one analog data unit is recorded in one recording region.

The recording of analog data is also effected by changing a time period in which the voltage is applied across the tunnel current probes 112 and the recording element 212. More specifically, the data write circuit 222 comprises means for determining the voltage application period in accordance with the data to be recorded, and means for applying the voltage across the probes 112 and the recording element 212 only during the determined period. The charge, the amount of which corresponds to the data to be recorded, is trapped on the recording element 212, and analog data is recorded.

Further, the recording of analog data is effected by changing the distance between the tunnel current probes 112 and the recording element 212 while the potentials of the probes 112 and the recording element 212 are being kept at constant values. In this case, the data write circuit 222 comprises means for determining the voltage applied to the electrode patterns 116b and 117b in accordance with the data to be recorded. The amount of charge to be trapped is varied by the change in distance between the probes 112 and the recording element 212. Thus, analog data is written.

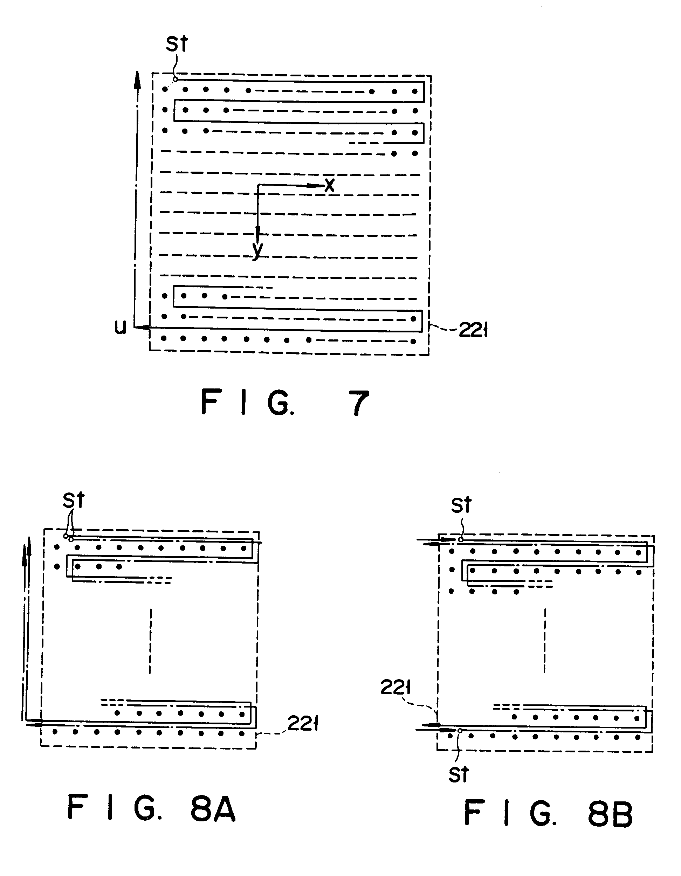

When the tunnel current probe 112 scans the associated memory region of the STM memory block 220, the probe 112 moves in a direction of symbol u (in Fig. 7), while writing data from the write (or read) start point St. If the write (read) start point St and a write (read) end point are located on the same side, the time in which the probe 112 returns from the end point to the start point St can be shortened.

Figs. 8A and 8B illustrate the movement of the probe in the write/read mode. Arrows of solid lines indicate the movement of the probe in the write mode, and arrows of dot-and-dash lines indicate the movement of the probe in the read-out mode. One of a FIFO (first in - First out)(Fig.8A) recording method or a LIFO (Last in - First out)(Fig.8B) recording method is selected by the STM scan synchronizing circuit 224. Of course, the probe can be returned to the start point St before it reaches the end point.

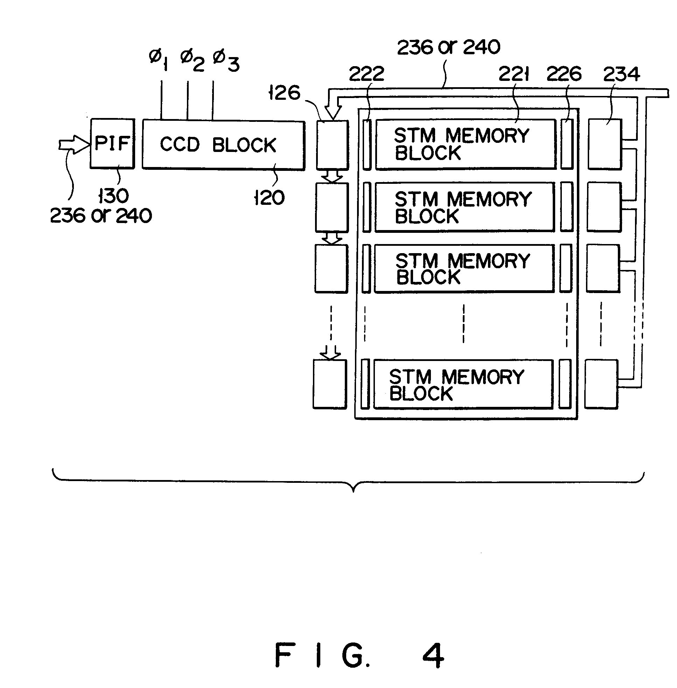

As described above, in the scan-type tunnel current arithmetic processing apparatus of the present invention, a high-speed arithmetic operation can be carried out by combining the STM memory of large capacity and the signal processing circuit, such as a CCD circuit, which is suitable for signal processing for writing/reading data in/from the STM memory. More specifically, the high-speed data input/output can be realized by providing, on a single substrate, the CCD circuit for enabling an easy signal shift operation with use of clocks, in addition to the circuits necessary for the STM memory, i.e. the tunnel current detector, data write circuit and STM scan synchronizing circuit, etc. Furthermore, the arithmetic processing apparatus of this invention comprises the switched-capacity circuit operated by clocks, in the rear stage of the tunnel current detector. Thus, analog-mode write and analog-mode signal processing can be performed. In the circuit system shown in Fig. 4, a logical circuit for data processing between STMs is constituted by an AND/OR circuit for receiving a tunnel current, and the parallel interface circuit 126 including a signal inverting circuit connected to the AND/OR circuit.

In the STM memory, the tunnel current probe moves over the recording element at a predetermined scan speed Vs, it records data at a predetermined time interval Tp (clock frequency ft = 1/Tp) and with a pulse width Td. On the other hand, the data input and data transfer for the CCD circuit are carried out by various methods such as three-phase transfer, two-phase transfer, quasi-single phase transfer and four-phase transfer. In the case where the clock frequency of the CCD circuit is set to fc and the parallel transfer, which characterizes the present invention, is performed, if one CCD circuit is made to correspond to one STM memory, serial recording can be performed in each unit of the corresponding CCD circuit and STM memory. Since both the CCD circuit and the STM memory are controlled by clocks and are operated in analog manner, the high-speed arithmetic processing can easily be realized. In other words, in the STM memory, analog signal recording using a tunnel current can be performed in accordance with the amount of data to be written and read in the digital manner. Also, since the CCD circuit can process analog signals, high-speed analog recording can be effected on the recording element of the STM memory after analog input data is transferred out from the CCD circuit, with use of a simple interface circuit and without using an A/D converter.

If an STM recording analog reference signal source circuit is added to the apparatus, a multi-value logical circuit can be formed in the CPU.

Furthermore, since the CCD circuit can have an optical sensor function, a multi-functional one chip processor, which performs operations from image input to image arithmetic processing, can easily been obtained.

The present invention is not limited to the above embodiment. Various modifications can be made within the scope of the appended claims. For example, the tunnel current probes 112 can be formed on the second cantilever 200, and the recording element can be formed on the first cantilever 100. Also, the second substrate 12 may be arranged above and first substrate 10 may be arranged below, such that the free end portions 110 and 210 of the cantilevers 100 and 200 face each other.

## Claims

1. A scanning tunneling microscope memory apparatus comprising:
tunnel current probes (112),
a recording element (212) arranged to face the tunnel current probes (112) and including recording blocks (220),
movement means (18) for moving the tunnel current probes (112) and the recording element (212) relative to each other,
write means (222) for writing data on the recording element (212) by use of the tunnel current probes (112);
read means (226) for reading out the data recorded on the recording element (212) by use of the tunnel current probes, and
control means (16) for controlling the movement means (18), the write means (222) and the read means (226),
characterized in that
an input/output arithmetic means (228) operated by clocks is connected to the write means (222) and the read means (226),
that the tunnel current probes (112) are formed on a first cantilever (100) having piezoelectric means (114a, 114b) and longitudinally extending electrodes (116, 117, 118) for energizing the piezoelectric means (114a, 114b) and
that the recording element (212) is formed on a second cantilever (200) crossing the first cantilever (100) at right angles and having piezoelectric means (214) and longitudinally running electrodes (216, 217) for energizing the piezoelectric means (214), such that the two cantilevers (100,200) can be moved transversely to their longitudinal direction in order to effect scanning and distance controlling movements.

2. The apparatus according to claim 1, which includes first and second substrates (10, 12), said first cantilever (100) being provided on the first substrate (10), said second cantilever (200) being provided on the second substrate (12), and said write and read means (222, 226) being arranged on one of the first and second substrates (10, 12).

3. The apparatus according to claim 1 or 2, characterized in that said write means (222) includes means for adjusting the magnitude (amplitude) of the voltage applied across the tunnel current probes (112) and the recording element (212).

4. The apparatus according to claim 1, 2 or 3, characterized in that said write means (222) includes means for adjusting, in accordance with data to be written, a voltage application time period in which a voltage is applied across the tunnel current probes (112) and the recording element (212).

5. The apparatus according to claim 1, 2 or 3, characterized in that said write means (222) includes means for adjusting, in accordance with data to be recorded, a distance between the tunnel current probes (112) and the recording element (212), across which a predetermined bias voltage is applied.

6. The apparatus according to anyone of the preceding claims, characterized in that said recording blocks (220) constitute a part of a memory which performs parallel input/output operation corresponding to said probes (112).

7. The apparatus according to anyone of the preceding claims, characerized in that said apparatus further comprises a CCD circuit (14), and said input/output arithmetic means (228) is controlled by said control means (16) for carrying out data processing between the CCD circuit (14) and the recording block (220) with use of predetermined clocks.

8. The apparatus according to claim 7, characterized in that said CCD circuit (14) has an optically sensing function.

9. The apparatus according to anyone of the preceding claims, characterized in that said control means (16) controls said movement means (18) to form the recording blocks as FIFO or LIFO type.

10. The apparatus according to anyone of the preceding claims, characterized in that said input/output arithmetic means (228) is formed of switched-capacity circuits.

## Patentansprüche

1. Rastertunnelmikroskop-Speichergerät mit:
Tunnelstromsonden (112),
einem Aufzeichnungselement (212), das so angeordnet ist, daß es den Tunnelstromsonden (112) zugewandt ist, und Aufzeichnungsblöcke (220) aufweist,
einer Bewegungseinrichtung (18) zum Bewegen der Tunnelstromsonden (112) und des Aufzeichnungselements (212) relativ zueinander,
einer Schreibeinrichtung (222) zum Schreiben von Daten auf dem Aufzeichnungselement (212) unter Einsatz der Tunnelstromsonden (112),
einer Leseeinrichtung (226) zum Auslesen der auf dem Aufzeichnungselement (212) aufgezeichneten Daten unter Einsatz der Tunnelstromsonden und
einer Steuereinrichtung (16) zum Steuern der Bewegungseinrichtung (18), der Schreibeinrichtung (222) und der Leseeinrichtung (226),
dadurch gekennzeichnet, daß
eine durch Takte angesteuerte arithmetische Eingabe/Ausgabe-Einrichtung (228) mit der Schreibeinrichtung (222) und der Leseeinrichtung (226) verbunden ist,
daß die Tunnelstromsonden (112) auf einem ersten, einseitig festgelegten Arm bzw. Ausleger (100) ausgebildet sind, der eine piezoelektrische Einrichtung (114a, 114b) und sich in Längsrichtung erstreckende Elektroden (116, 117, 118) zum Erregen der piezoelektrischen Einrichtung (114a, 114b) besitzt, und
daß das Aufzeichnungselement (212) auf einem zweiten einseitig festgelegten Arm bzw. Ausleger (200) ausgebildet ist, der den ersten Auslger (100) rechtwinklig kreuzt und eine piezoelektrische Einrichtung (214) und in Längsrichtung verlaufende Elektroden (216, 217) zum Erregen der piezoelektrischen Einrichtung (214) aufweist, derart, daß die beiden Ausleger (100, 200) quer zu ihrer Längsrichtung bewegt werden können, um Abtast- und Abstandssteuerbewegungen zu bewirken.

2. Gerät nach Anspruch 1, das erste und zweite Substrate (10, 12) aufweist, wobei der erste Ausleger (100) auf dem ersten Substrat (10) und der zweite Ausleger (200) auf dem zweiten Substrat (12) vorgesehen ist und wobei die Schreibund Leseeinrichtung (222, 226) auf dem ersten oder dem zweiten Substrat (10, 12) angeordnet ist.

3. Gerät nach Anspruch 1 oder 2, dadurch gekennzeichnet, daß die Schreibeinrichtung (222) eine Einrichtung zum Einstellen der Größe (Amplitude) der an die Tunnelstromsonden (112) und das Aufzeichnungselement (212) angelegten Spannung aufweist.

4. Gerät nach Anspruch 1, 2 oder 3, dadurch gekennzeichnet, daß die Schreibeinrichtung (222) eine Einrichtung zum in Übereinstimmung mit den zu schreibenden Daten erfolgenden Einstellen einer Spannungsanlegungs-Zeitdauer, für die eine Spannung an die Tunnelstromsonden (112) und das Aufzeichnungselement (212) angelegt wird, aufweist.

5. Gerät nach Anspruch 1, 2 oder 3, dadurch gekennzeichnet, daß die Schreibeinrichtung (222) eine Einrichtung zum in Übereinstimmung mit aufzuzeichnenden Daten erfolgenden Einstellen eines Abstands zwischen den Tunnelstromsonden (112) und dem Aufzeichnungselement (212), zwischen die eine vorbestimmte Vorspannung angelegt ist, aufweist.

6. Gerät nach einem der vorhergehenden Ansprüche, dadurch gekennzeichnet, daß die Aufzeichnungsblöcke (220) einen Teil eines Speichers bilden, der einen parallelen Eingabe/Ausgabebetrieb entsprechend den Sonden (112) durchführt.

7. Gerät nach einem der vorhergehenden Ansprüche, dadurch gekennzeichnet, daß das Gerät weiterhin eine CCD-Schaltung (14) aufweist und daß die arithmetische Eingabe/Ausgabeeinrichtung (228) durch die Steuereinrichtungen (16) zum Ausführen einer Datenverarbeitung zwischen der CCD-Schaltung (14) und dem Aufzeichnungsblock (220) unter Einsatz vorbestimmter Takte gesteuert wird.

8. Gerät nach Anspruch 7, dadurch gekennzeichnet, daß die CCD-Schaltung (14) eine optische Sensorfunktion besitzt.

9. Gerät nach einem der vorhergehenden Ansprüche, dadurch gekennzeichnet, daß die Steuereinrichtung (16) die Bewegungssteuerung (18) zur Bildung der Aufzeichnungsblöcke als FIFO- oder LIFO-Typ steuert.

10. Gerät nach einem der vorhergehenden Ansprüche, dadurch gekennzeichnet, daß die arithmetische Eingabe/Ausgabeeinrichtung (228) durch Schaltungen mit geschaltener Kapazität gebildet ist.

## Revendications

1. Appareil formant mémoire avec microscope à effet tunnel et à balayage, comprenant :
- des sondes (112) à courant tunnel,
- un élément d'enregistrement (212) disposé de façon à être en vis-à-vis des sondes (112) à courant tunnel et contenant des blocs d'enregistrement (220),
- un moyen de déplacement (18) pour déplacer les sondes (112) à courant tunnel et l'élément d'enregistrement (212) l'un par rapport à l'autre,
- un moyen d'écriture (222) pour écrire des données sur l'élément d'enregistrement (212) en utilisant les sondes (112) à courant tunnel,
- un moyen de lecture (226) pour lire les données enregistrées sur l'élément d'enregistrement (212) en utilisant les sondes à courant tunnel, et
- un moyen de commande (16) pour commander le moyen de déplacement (18), le moyen d'écriture (222) et le moyen de lecture (226),
caractérisé en ce que :
- un moyen arithmétique (228) d'entrée/sortie, actionné par des horloges, est relié au moyen d'écriture (222) et au moyen de lecture (226),
- les sondes (112) à courant tunnel sont formées sur un premier bras en porte-à-faux (100) comportant des moyens piézo-électriques (114a, 114b) et des électrodes (116, 117, 118) s'étendant dans le sens longitudinal pour exciter les moyens piézoélectriques (114a, 114b), et
- l'élément d'enregistrement (212) est formé sur un second bras en porte-à-faux (200) qui croise le premier bras en porte-à-faux (100) à angle droit, et qui comporte un moyen piézo-électrique (214) et des électrodes (216, 217) s'étendant longitudinalement pour exciter le moyen piézoélectrique (214), de telle sorte que les deux bras en porte-à -faux (100, 200) peuvent se déplacer transversalement à leur direction longitudinale afin d'effectuer un balayage et des déplacements de commande de la distance.

2. Appareil selon la revendication 1, qui inclut un premier et un second substrats (10, 12), ledit premier bras (100) étant placé sur le premier substrat (10), ledit second bras (200) étant placé sur le second substrat (12), et lesdits moyens d'écriture et de lecture (222, 226) étant placés sur l'un du premier ou du second substrat (10, 12).

3. Appareil selon la revendication 1 ou 2, caractérisé en ce que ledit moyen d'écriture (222) inclut un moyen pour régler l'amplitude de la tension appliquée entre les sondes (112) à courant tunnel et l'élément d'enregistrement (212).

4. Appareil selon la revendication 1, 2 ou 3, caractérisé en ce que ledit moyen d'écriture (222) inclut un moyen pour régler, en fonction des données à enregistrer, la période de temps d'application de la tension pendant laquelle une tension est appliquée entre les sondes (112) à courant tunnel et l'élément d'enregistrement (212).

5. Appareil selon la revendication 1, 2 ou 3, caractérisé en ce que ledit moyen d'écriture (222) inclut un moyen pour régler, en fonction des données à enregistrer, la distance entre les sondes (112) à courant tunnel et l'élément d'enregistrement (212), entre lesquels est appliquée une tension de polarisation prédéterminée.

6. Appareil selon l'une quelconque des précédentes revendications, caractérisé en ce que lesdits blocs d'enregistrement (220) constituent une partie de la mémoire qui réalise une opération d'entrée/sortie parallèle correspondant auxdites sondes (112).

7. Appareil selon l'une quelconque des précédentes revendications, caractérisé en ce que ledit appareil comprend en outre un circuit CCD (14) et ledit moyen (228) arithmétique d'entrée/sortie est commandé par ledit moyen de commande (16) pour effectuer le traitement des données entre le circuit CCD (14) et le bloc d'enregistrement (220) en utilisant des impulsions d'horloge prédéterminées.

8. Appareil selon la revendication 7, caractérisé en ce que le circuit CCD (14) a une fonction de capteur optique.

9. Appareil selon l'une quelconque des précédentes revendications, caractérisé en ce que ledit moyen de commande (16) commande ledit moyen de déplacement (18) pour former des blocs d'enregistrement du type FIFO ou LIFO.

10. Appareil selon l'une quelconque des précédentes revendications, caractérisé en ce que ledit moyen (228) arithmétique d'entrée/sortie est formé de circuits commutés par capacité.
